# EUROPÄISCHE PATENTSCHRIFT

(11) **EP 1 044 332 B1**
(45) Veröffentlichungstag und Bekanntmachung des Hinweises auf die Patenterteilung: **22.09.2004**
(21) Anmeldenummer: 99953869.7
(22) Anmeldetag: 18.10.1999
(51) Int. Cl.: F04C 11/00, F04C 2/18

(54) **BAUREIHE FÜR ZAHNRADMOTOREN MIT UNTERSCHIEDLICH THEORETISCH ABGEHBAREM DREHMOMENT**
SERIES FOR COMPRESSED AIR MOTORS WITH TORQUE WHICH CAN BE THEORETICALLY OUTPUT IN A VARIED MANNER
GAMME DE MOTEURS A AIR COMPRIME AYANT DIFFERENTS COUPLES THEORIQUEMENT CEDES

(30) Priorität: 29.10.1998 DE 19849805
(43) Veröffentlichungstag der Anmeldung: 18.10.2000
(73) Patentinhaber: Voith Turbo GmbH & Co. KG, 89522 Heidenheim (DE)
(72) Erfinder: KÖRNER, Tillmann, D-89551 Zang (DE)
(74) Vertreter: Dr. Weitzel & Partner
(86) Internationale Anmeldenummer: PCT/EP1999/007879
(87) Internationale Veröffentlichungsnummer: WO 2000/026540

(56) Entgegenhaltungen:
- EP-A- 0 843 095
- DE-A- 2 016 171
- DE-A- 4 310 211
- GB-A- 605 104
- US-A- 2 720 171

## Beschreibung

Die Erfindung betrifft eine Baureihe für Zahnradmotoren mit theoretisch unterschiedlich abgebbarem Drehmoment.

Hydraulikmotoren in Form von Zahnradmotoren, welche die einem Druckflüssigkeitsstrom eingeprägte Energie in eine drehende Bewegung mit einem bestimmten Drehmoment umwandeln, und bei welchen als Verdrängerelemente wenigstens zwei miteinander kämmende Zahnräder verwendet werden, die mit engem Spalt in einem Gehäuse laufen, sind in einer Vielzahl von Ausführungen bekannt. Hinsichtlich der Art der Verdrängerelemente werden
a) Zahnradmotoren mit Außenverzahnung
b) Zahnradmotoren mit Innenverzahnung
unterschieden. Diesbezüglich wird auch auf Dubbel: Taschenbuch für den Maschinenbau, 18. Auflage, H4 bis H5 verwiesen.

Hauptkennwerte der Hydromotoren sind das theoretisch abgebbare Enddrehmoment sowie der Abtriebsdrehzahlbereich. Eine wesentliche Rolle für die Auswahl der einzelnen Hydraulikmotoren spielt jedoch auch das geometrische Verdrängungsvolumen, auch Schluckvolumen, und der Nenndruck der Hydraulikmotoren. Aufgrund der unterschiedlichsten Anwendungsgebiete und den daraus resultierenden Einsatzerfordernissen werden Hydraulikmotoren für unterschiedliche theoretisch abgebbare Drehmomente angeboten. Das Anbieten erfolgt in der Regel in Baureihen, wobei die einzelnen Hydraulikmotoren einer Baureihe vorzugsweise den gleichen Aufbau aufweisen, sich jedoch hinsichtlich ihrer Kennwerte und Abmessungen erheblich voneinander unterscheiden, wobei ein entsprechender Zuwachs an theoretisch abgebbarem Drehmoment durch eine Änderung des geometrischen Verdrängungsvolumens, beispielsweise einem Zuwachs an Schluckvolumen mit einer Vergrößerung der Baugröße einhergeht. Eine Beeinflussung des Verdrängungsvolumens kann in Analogie zur Beeinflussung des dem Verdrängungsvolumen äquivalenten Fördervolumens bei Pumpen wie in W. Gutbrod: "Förderstrom von Außenund Innenzahnradpumpen und seine Ungleichförmigkeit", DE-Z: Ölhydraulik und Pneumatik 18 (1975) Nr. 2, S. 97-104 u. a. durch Verkleinern oder Vergrößern des Kopfpreises einer der beiden Verdrängerelemente, vorgenommen werden. Die Vergrößerung des möglichen theoretischen geometrischen Verdrängungsvolumens erfolgt dabei beispielsweise in größeren Abständen in Gruppen, wobei das wesentliche Unterscheidungsmerkmal zwischen den Gruppen in den unterschiedlichen radialen Abmessungen der Verdrängerelemente und dem Achsabstand der Räder besteht. Innerhalb der Gruppe erfolgt in kleineren Schritten eine Erhöhung des möglichen theoretisch geometrischen Fördervolumens durch Vergrößerung der Verzahnungsbreite, d.h. der Erstreckung der Verzahnung in axialer Richtung. Dies führt dazu, daß die einzelnen Motoren in Antriebssträngen bei Änderung der Einsatzerfordernisse in der Regel nicht frei austauschbar sind, da diese hinsichtlich des beanspruchten Bauraumes in axialer Richtung sich stark voneinander unterscheiden und kaum Gemeinsamkeiten zwischen den einzelnen Typen festgestellt werden können.

Das Dokument DE-A-4 310 211 zeigt eine hydraulische Zahnradmaschine mit mindestens einem Hauptzahnradpaar und einem Kompensationszahnradpaar. Das Kompensationszahnradpaar hat den Zweck, ein Pulsieren des Förderstroms zu vermindern bzw. zu verhindern. Daher arbeitet dieses Kompensationszahnradpaar stets gegensinnig zum Hauptzahnradpaar, d. h. in einem Fall wirkt das Hauptzahnradpaar als Pumpe und das Kompensationszahnradpaar als Motor, und im anderen Fall wirkt das Hauptzahnradpaar als Motor und das Kompensationszahnradpaar als Pumpe. Somit arbeitet das Kompensationszahnradpaar hinsichtlich der Gesamtförderleistung der dargestellten Zahnradmaschine stets gegen das Hauptzahnradpaar, weswegen der Konstantanteil am Momentanförderstrom des Kompensationszahnradpaares möglichst gering sein sollte.

Um dies zu erreichen, weisen die Zahnräder des Kompensationszahnradpaares in einer Ausführung einen kleineren Kopfkreisdurchmesser als die Zahnräder des Hauptzahnradpaares auf, wobei gleichzeitig beide Zahnradpaare den selben Achsabstand aufweisen. Gleichzeitig wird jedoch vorgeschlagen, möglichst auch den Achsabstand des Kompensationszahnradpaares gegenüber dem Hauptzahnradpaar zu vergrößern, um somit den Konstantanteil des Momentanförderstroms zu verringern.

Der Erfindung liegt daher die Aufgabe zugrunde, eine Baureihe für Zahnradmotoren für unterschiedliche theoretisch abgebbare Drehmomente und damit unterschiedliche geometrische Verdrängungsvolumina sowie der Eignung für unterschiedliche Einsatzerfordernisse zu schaffen, bei welcher die einzelnen Motoren der Baureihe möglichst viele konstruktive Merkmale gemeinsam aufweisen und die sich lediglich durch geringfügige Modifikationen voneinander unterscheiden. Die Hydraulikmotoren selbst sind bezüglich des erforderlichen Bauraumes möglichst klein zu halten, wobei die Möglichkeit einer Austauschbarkeit gegen einen Hydraulikmotor größeren oder kleineren geometrischen Verdrängungsvolumens in hydrostatischen Systemen gegeben sein soll, ohne daß die gesamte Antriebskette ausgetauscht oder modifiziert werden muß, insbesondere sollen Modifikationen durch Drehzahländerung (= i der Antriebskette) vermieden werden.

Die erfindungsgemäße Lösung ist durch die Merkmale des Anspruches 1 charakterisiert. Vorteilhafte Ausgestaltungen sind in den Unteransprüchen beschrieben.

Eine Baureihe von Zahnradmotoren für unterschiedliche theoretisch abgebbare Drehmomente und damit unterschiedliche geometrische Verdrängungsvolumina umfaßt wenigstens zwei Zahnradmotoren. Jeder Zahnradmotor weist wenigstens zwei miteinander kämmende Zahnräder als Verdrängungselemente auf. Erfindungsgemäß ist vorgesehen, daß jeder Zahnradmotor der Baureihe die folgenden hinsichtlich der Abmessung identischen Konstruktionsmerkmale aufweist:
a) Achsabstand a zwischen den geometrischen Achsen der beiden miteinander kämmenden Zahnräder bzw. der theoretischen Rotationsachsen der beiden miteinander kämmenden Zahnräder;
b) Verzahnungsbreite b, d.h. Erstreckung der Verzahnung in axialer Richtung.

D.h. zwischen den einzelnen Zahnradmotoren einer Baureihe besteht kein Unterschied hinsichtlich des Achsabstandes und der Verzahnungsbreite.

Die unterschiedlichen theoretisch abgebbaren Drehmomente und damit unterschiedliche geometrische Verdrängervolumina werden erfindungsgemäß bei Zahnradmotoren einer Baureihe mit gleichem Achsabstand zwischen den geometrischen Achsen bzw. den theoretischen Rotationsachsen zwischen den einzelnen Verdränger- bzw. Verdrängungselementen mit einer konstanten Verzahnungsbreite über die Zahnhöhe als die das Verdrängungsvolumen beeinflussende Größe eingestellt. Dabei genügt es, wenn wenigstens eines der beiden miteinander kämmenden Zahnräder hinsichtlich seines Kopfkreisdurchmessers von einem Motor zum nächsten Motor der Baureihe verändert wird, wobei bei Ausführungen mit nur zwei miteinander kämmenden Zahnrädern vorzugsweise die Kopfkreisdurchmesser beider Zahnräder entsprechend verändert werden. Dies wird vorzugsweise durch Verwendung einer Hochverzahnung erzielt.

Der Erfinder hat erkannt, daß beim Einsatz von sogenannten Hochverzahnungen relativ hohe Verdrängungsvolumen erzielt werden können, da die Verdrängungsvolumenempfindlichkeit über den Kopfkreisdurchmesser bzw. den Kopfkreisradius wesentlich höher ist, als bei Normalverzahnungen. Bereits geringe Kopfkreisänderungen genügen, um eine entsprechende Vergrößerung des Verdrängungsvolumens zu erzielen. Der Volumenzuwachs in radialer Richtung des einzelnen Zahnradmotors in Richtung der geometrischen Achsen der Verdrängerelemente bzw. die Symmetrieachsen der Verdrängerelemente betrachtet ist relativ gering. In Analogie gilt diese Aussage auch für eine Verringerung des Kopfkreisdurchmessers bzw. des Kopfkreisradius eines einzelnen Verdrängerelementes. Die axiale Baulänge bleibt für alle Zahnradmotoren der Baureihe konstant. Eine Änderung der Größe der Baueinheit erfolgt lediglich in radialer Richtung, wobei aufgrund der hohen Verdrängervolumenempfindlichkeit über den Kopfkreisradius ein lediglich geringer Volumenzuwachs für die Gesamtbaueinheit Zahnradmotor realisiert wird. Die gleichbleibende axiale Baulänge der Zahnradmotoren Baueinheit ermöglicht es, den in einer Antriebskette angeordneten Zahnradmotor entsprechend dem Einsatzerfordernis an das theoretisch abzugehende Drehmoment und damit Verdrängervolumen durch einen anderen Zahnradmotor dieser Baureihe, welcher für größere oder kleinere Verdrängervolumina ausgelegt ist, auszutauschen, ohne daß die gesamte Antriebskette ausgetauscht bzw. an den neu einzusetzenden Hydromotor angepaßt werden muß.

In einer besonders bevorzugten Ausführung der Baureihe für Zahnradmotoren wird bei einem vordefinierbaren, für alle Hydromotoren der Baureihe konstanten Achsabstand den jeweiligen Verdrängerelementen, d.h. Zahnrädern der einzelnen Hydromotoren der Baureihe, eine konstante Teilkreisteilung p zugewiesen, d.h. der Modul als Größenfaktor der Verzahnung ist für alle Zahnradmotoren ebenfalls konstant, so daß die Möglichkeit besteht, die Verdrängerelemente für die einzelnen Zahnradmotoren unterschiedlicher Verdrängervolumina jeweils aus einer Motorenanordnung mit einem einheitlichen Grundverdrängerelement zu entwickeln, wie beispielsweise in Anspruch 8 beschrieben, in dem die Grundverzahnung für ein maximales theoretisches Verdrängervolumen wenigstens eines der beiden Verdrängerelemente als Hochverzahnung ausgeführt ist und für geringeres bzw. minimales Verdrängervolumen die Verzahnung bzw. die einzelnen Verzahnungselemente entsprechend auf einen Kopfkreisdurchmesser abgearbeitet, inbesondere abgeschliffen werden. Diese Vorgehensweise ermöglicht die Schaffung einer Baureihe für Zahnradmotoren unterschiedlicher Verdrängervolumina, welche besonders kompakt und hinsichtlich der einzelnen verwendeten Elemente stark standardisiert ausgeführt sind. Der hohe Grad an Standardisierung führt zu einer Verringerung des Fertigungsaufwandes, was sich wiederum in den Kosten niederschlägt.

Die Auslegung der Grundbaueinheit für maximales theoretisches Verdrängungsvolumen und damit maximal theoretisch abgebbares Drehmoment hinsichtlich der einzelnen miteinander kämmenden Zahnräder erfolgt entsprechend den Grundlagen zur Auslegung der Geometrie von Zahnradpaarungen. Dies gilt für den allgemeinen Fall, daß lediglich Einfluß auf die Zahnhöhe genommen wird, unabhängig in welcher Form und für die besonders vorteilhafte Ausführung, bei welcher ausgehend von einem für maximales Verdrängervolumen ausgelegtem Verdrängerelement durch Verkürzung der Zahnhöhe, d.h. Abtragen von Material, geringere Verdrängungsvolumen realisiert werden können.

Die erfindungsgemäße Lösung kann in Zahnradmotoren mit
a) Außenverzahnung
b) Innenverzahnung
angewandt werden. Dabei ist es unerheblich, ob es sich bei den Zahnradmotoren um einstufige oder mehrstufige Zahnradmotoren handelt.

Bei Zahnradmotoren mit außenverzahnten Verdrängerelementen werden beide Verdrängerelemente vorzugsweise hinsichtlich der Größe und der Verzahnungsgeometrie gleich ausgelegt bzw. ausgeführt, während bei zweioder mehrstufigen Zahnradmotoren Verdrängerelemente mit unterschiedlicher Auslegung hinsichtlich Geometrie und Abmessung zum Einsatz gelangen.

Die Verzahnung selbst ist als Evolventenverzahnung ausgeführt. Dabei ist immer zu berücksichtigen, daß auch bei einer Änderung der Kopfkreisdurchmesser zwischen den einzelnen Verdrängerelementen der einzelnen Motoren der Baureihe durch das Anliegen der Flanken eine Abdichtung zwischen Saugraum und Druckraum realisiert wird, um die volle Funktionstüchtigkeit des Zahnradmotors zu gewährleisten.

Die erfindungsgemäße Lösung wird nachfolgend anhand von Figuren erläutert. Darin ist im einzelnen folgendes dargestellt:
- Fig. 1a1 und 1a2: verdeutlicht beispielhaft eine Ausführung eines Zahnradmotors einer erfindungsgemäß ausgeführten Zahnradmotorenreihe in zwei Ansichten;
- Fig. 1b1 und 1b2: verdeutlichen einander gegenübergestellt zwei mögliche Ausführungen für Zahnradmotoren einer erfindungsgemäß gestalteten Motorenbaureihe anhand eines einstufigen Zahnradmotors mit Außenverzahnung, wobei Fig. 1b1 einen Zahnradmotor für hohe übertragbare Drehmomente und Fig. 1b2 einen Zahnradmotor für niedrige übertragbare Drehmomente darstellt;
- Fig. 2a und 2b: verdeutlichen jeweils einen Ausschnitt der ineinandergreifenden Verzahnung der Verdrängerelemente der in den Fig. 1a und 1b dargestellten Motoren;
- Fig. 3: zeigt eine Anwendung der erfindungsgemäßen Lösung für mehrstufige Zahnradmotoren mit Außenverzahnung.

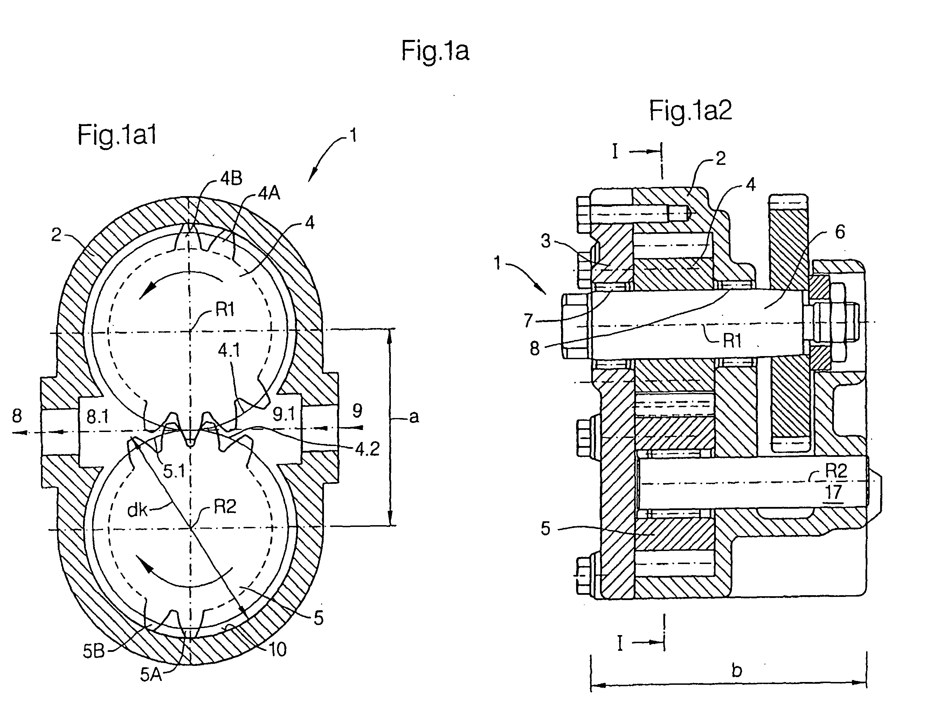

Die Fig. 1a verdeutlicht in einem Schnitt dargestellt, einen Zahnradmotor 1 einer erfindungsgemäß gestalteten Baureihe für Zahnradmotoren für unterschiedliche theoretisch abgebbare Drehmomente. Dieser weist ein Gehäuse 2 auf, das stirnseitig durch einen Deckel 3 begrenzt wird. Im Gehäuse sind die beiden Verdrängerelemente - ein erstes Verdrängerelement 4 und ein zweites Verdrängerelement 5 - angeordnet. Die Verdrängerelemente 4 bzw. 5 sind als außenverzahnte Zahnräder in Form von Stirnrädern, welche miteinander kämmen, ausgeführt. Beide laufen mit engem Spiel im Gehäuse 2. Das erste Verdrängerelement 4 ist auf einer Antriebswelle 6 gelagert. Die Antriebswelle 6 wiederum ist über Lager 7 und 8 im Gehäuse 2 bzw. dem das Gehäuse abschließenden Deckel 3 gelagert. Der Zahnradmotor 1 weist desweiteren einen Anschluß 8 zur Ausgabe des verdrängten Betriebsmittels und einen Druckanschluß 9 auf. Beide, der Druckanschluß 9 und der Anschluß 8, sind mit entsprechenden Räumen, 8.1 und 9.1 gekoppelt. Das Betriebsmittel gelangt über den Druckanschluß 9 in den Druckraum und erzeugt an den Verdrängerelementen ein Moment, welches zu einer Rotation dieser und Mitnahme des Betriebsmittels zwischen den einzelnen Verzahnungselementen bewirkt. Das zweite Verdrängerelement wird über den Zahneingriff 4/5 angetrieben. In den Zahnlücken der Verdrängerelemente, den Zahnlücken 4.1 des ersten Verdrängerelementes und den Zahnlücken 4.2 des zweiten Verdrängerelementes wird die Hydraulikflüssigkeit zum Anschluß 8 gefördert und von dort abgeführt.

Zusätzlich besteht die Möglichkeit, den Zahnradmotor 1 mit axialem Spielausgleich auszuführen. Dies kann durch einseitige Beaufschlagung der Lagerung der Verdrängerelemente oder beidseitige Beaufschlagung mit Betriebsdruck erfolgen. Dies bietet den Vorteil, daß das Axialspiel der einzelnen Zahnräder druckabhängig verringert werden kann.

Das theoretisch abgebbare Drehmoment, welches in Abhängigkeit des Verdrängervolumens einstellbar ist, wird erfindungsgemäß durch das durch die einzelnen Verzahnungen der Verdrängerelemente 4 bzw. 5 und der Innenwand 10 des Gehäuses 2 gebildete Verdrängungsvolumen und den Druck des Betriebsmittels am Druckanschluß beschrieben, d.h. durch die sogenannten Zahnlücken 4.1 bzw. 5.1 zwischen zwei einander benachbarten Zahnelementen 4A und 4B bzw. 5A und 5B der einzelnen Verdrängerelemente 4 bzw. 5, wie in der Fig. 1a1 in einer Ansicht 1-1 entsprechend Fig. 1a2 nicht dimensionsgerecht dargestellt.

Beide Verdrängerelemente 4 und 5 sind für die Ausführung entsprechend Fig. 1a identisch ausgelegt, d.h. weisen gleiche geometrische Abmessungen auf.

Die Rotations- bzw. Symmetrieachsen R1 für das Verdrängerelement 4 und R2 für das Verdrängerelement 5 weisen einen bestimmten Abstand, d.h. im dargestellten Fall den Achsabstand a, auf. Die Erstreckung der Baueinheit Zahnradmotor 1 in axialer Richtung ist durch die Abmessung b charakterisiert.

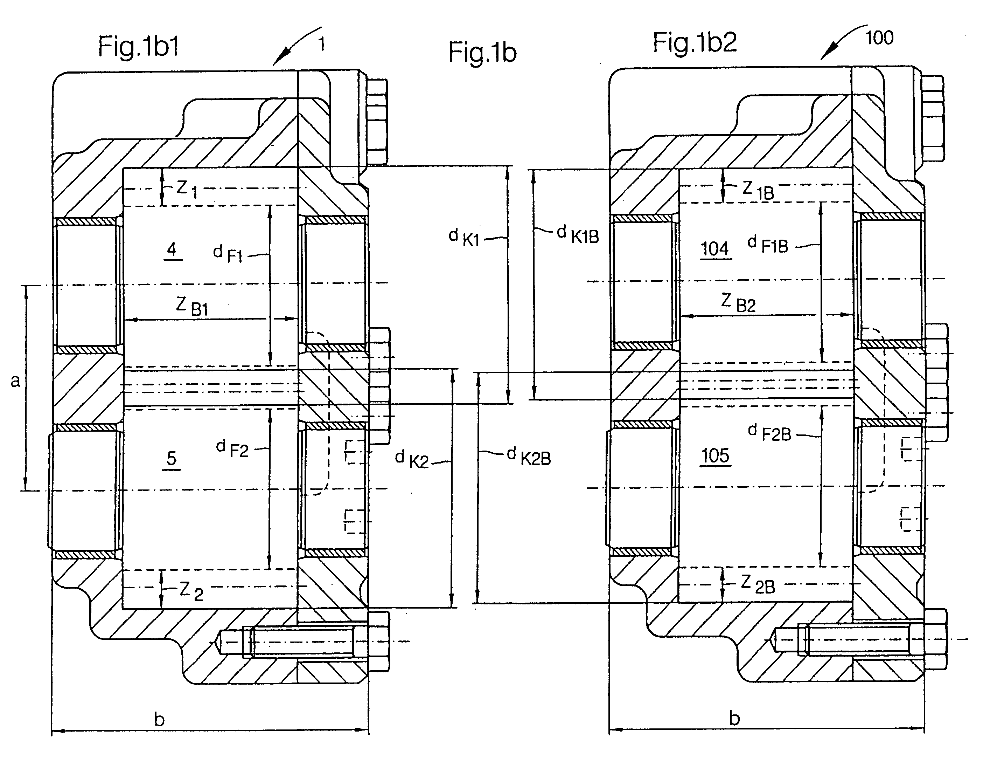

Aus den Fig. 1b1 und 1 b2 für eine mögliche Ausführung eines Zahnradmotors 1 und eines weiteren Zahnradmotors 100 aus der erfindungsgemäßen Zahnradmotorenbaureihe ist ersichtlich, daß die Abstände der theoretischen Rotationsachsen bzw. Symmetrieachsen R1 bzw. R2, welcher auch als Achsabstand a bezeichnet wird, und die axiale Erstreckung b für beide Motoren identisch sind. Der Achsabstand a, welcher in der Regel durch den Abstand der Achsen bestimmt wird, auf welchen die einzelnen Verdrängerelemente gelagert sind, kann auch als Abstand zwischen zwei rotierenden Wellen verstanden werden, wie es dann der Fall ist, wenn das zweite Verdrängerelement drehfest mit einer Welle verbunden ist. Wenigstens das erste Verdrängerelement ist mit der Antriebswelle drehfest verbunden.

Der erhebliche Unterschied zwischen beiden Zahnradmotoren 1 und 100 der Zahnradmotorenbaureihe besteht darin, daß die Verdrängerelemente unterschiedliche Kopfkreisdurchmesser aufweisen. Die Fig. 1 b2 verdeutlicht dazu eine Ausführung mit verringertem Verdränger- bzw. Verdrängungsvolumen gegenüber dem Zahnradmotor 1 gemäß der Fig. 1b1. Dazu sind die Verdrängerelemente 4 bzw. 5 für den Zahnradmotor 1 und 104 bzw. 105 für den Zahnradmotor 100 als Hochverzahnung ausgeführt. Der Kopfkreisdurchmesser d_{K1B}, d_{K2B} für die Verdrängerelemente 104 bzw. 105 ist geringer, als der Kopfkreisdurchmesser d_{K1}, d_{K2} der Verzahnungselemente 4A, 4B des Zahnradmotors 1. Die Fußkreisdurchmeser d_{F1B'} d_{F2B}, d_{F1'} d_{F2} für die einzelnen Verdrängerelemente 104, 105 bzw. 4, 5 der Zahnradmotoren 100 bzw. 1 sind identisch ausgeführt. Aufgrund der sich daraus ergebenden Differenz in Form der Zahnhöhe z_{1B}, z_{2B}, Z₁ bzw. Z₂ ergeben sich somit für das mögliche verdrängbare Volumen zwischen zwei einander benachbarten Zahnelementen 104A, 104A bzw. 4A bzw. 4B und 105A, 105B bzw. 5A, 5B bei gleicher axialer Erstreckung und damit Verzahnungsbreite z_{B1} und z_{B2} unterschiedliche Größen.

Die dargestellte Ausführung mit zwei identisch ausgelegten Verdrängerelementen 4, 5 bzw. 104 und 105 stellt eine besonders bevorzugte Ausführung dar. Diese ermöglicht es, ausgehend von einer Zahnradmotorenausführung mit Verdrängerelementen 4, 5 entsprechend der Fig. 1a bzw. 1b durch einfache Bearbeitung der Verdrängerelemente die Verdrängerelemente 104, 105 des Zahnradmotors 100 zu entwickeln. Dies kann, wie bereits ausgeführt, durch einfaches Abschleifen der einzelnen Verzahnungselemente und damit der Verringerung der Zahnhöhe erfolgen. Auch das Gehäuse muß ebenfalls mit der Bohrung (Ausfräsung) für die Zahnräder versehen werden.

Die dargestellte Verzahnung ist eine Geradverzahnung bzw. Stirnverzahnung. Vorzugsweise sind diese Verzahnungen als Evolventenverzahnung ausgeführt. Denkbar ist es jedoch auch, die Verzahnung der einzelnen Verzahnungselemente in komplementärer Weise zueinander als Schrägverzahnung auszuführen. Eine derartige Ausführung zeichnet sich durch eine sehr geringe Geräuschentwicklung bei großen und kleinen Verdrängungsvolumen aus. Die erzielte Sprung- bzw. Profilüberdeckung sollte dann in beiden Fällen noch über 2 liegen.

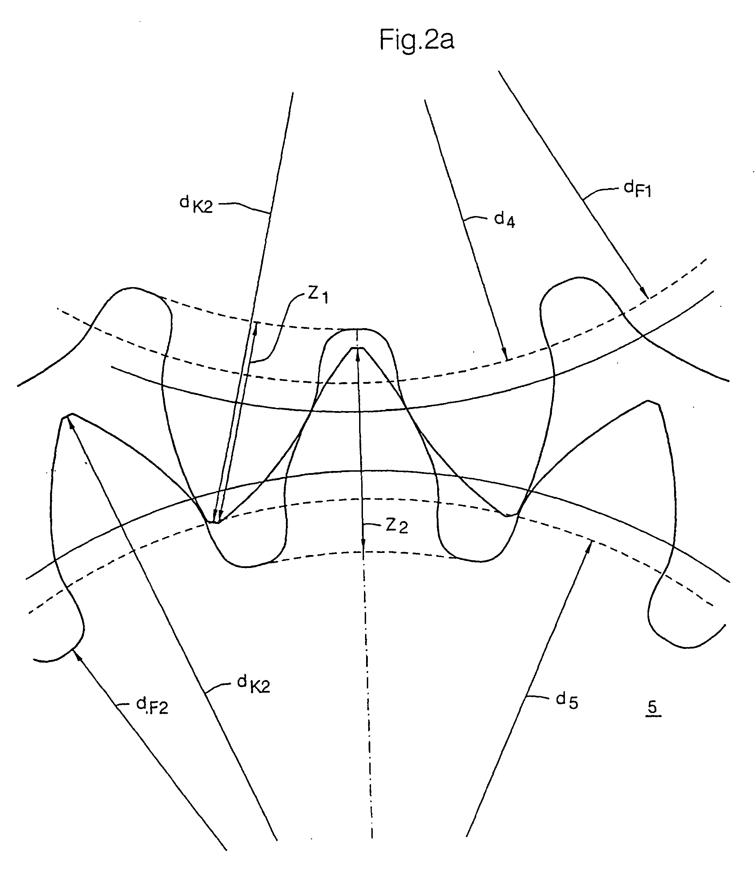

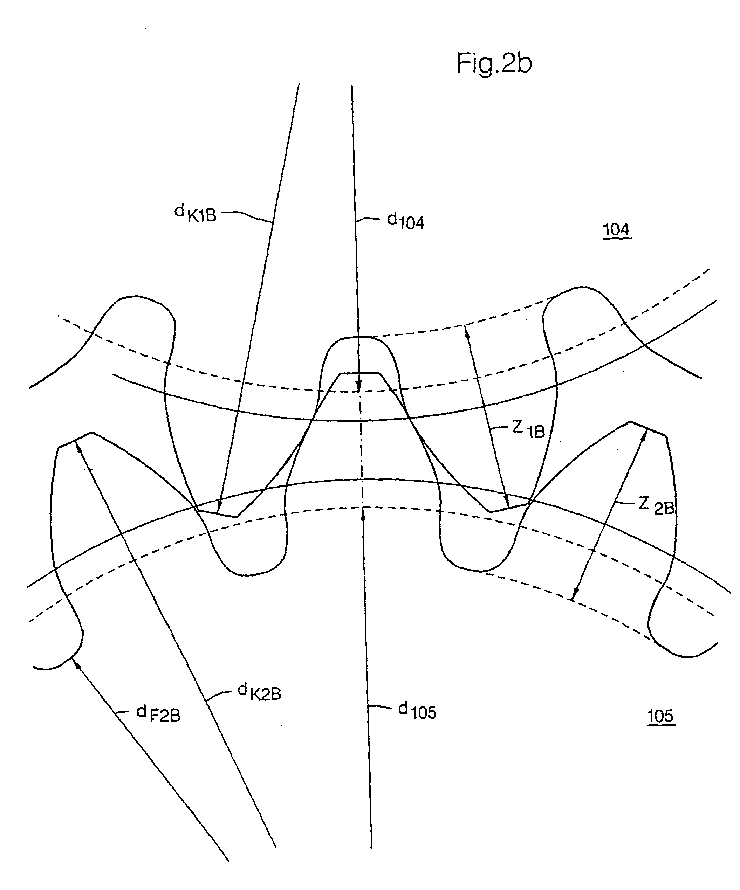

Die Fig. 2a und 2b verdeutlichen Ausschnitte eines Gegenstandes aus den Fig. 1b1 und 1b2 in vergrößerter Darstellung in einer Ansicht von rechts. Diese dienen der Verdeutlichung des Ineineinandergreifens der einzelnen Verzahnungselemente der einzelnen Verdrängerelemente 4, 5 bzw. 104, 105. Zur Verdeutlichung sind noch einmal die geometrischen Größen zur Charakterisierung einer Verzahnung eingetragen. Dargestellt sind der Grundkreisdurchmesser d₄, d₁₀₄. Desweiteren die Kopfkreisdurchmesser d_{K1B}, d_{K2B}, d_{K1,} d_{K2} sowie die Fußkreisdurchmesser d_{F1B}, d_{F2B}, d_{F1}, d_{F2} sowie die Zahnhöhen Z_{1B}, Z_{2B}, z, und z₂. Für beide Ausführungen entsprechend der Fig. 2A und 2B weisen die einzelnen Verdrängerelemente 4, 5 bzw. 104, 105 eine identische Teilung p auf.

Die Ausführung der Verdrängerelemente eines Motors einer Motorenbaureihe mit identischen Abmessungen bzw. mit identischer geometrischer Auslegung ermöglicht eine besonders standardisierte Fertigung der einzelnen Motoren der Motorenbaureihe. Die Verzahnungen selbst können alle identisch angefertigt werden.

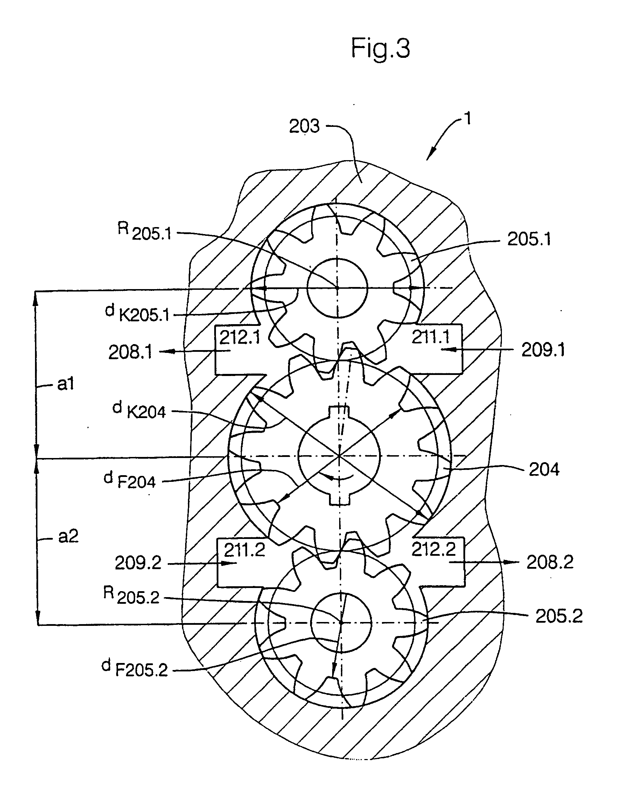

Die Fig. 3 verdeutlicht einen Zahnradmotor 200 mit Außenverzahnung in Form eines zweiströmigen Zahnradmotors in einer Schnittdarstellung. Dieser weist drei Verdrängerelemente, ein erstes Verdrängerelement 204 und zwei weitere Verdrängerelemente 205.1 bzw. 205.2 auf. Diese sind in einem Gehäuse 202 mit einem vorzugsweise axial ausgeführten Gehäusedeckel 203 angeordnet und gelagert. Der Zahnradmotor 200 weist zwei Sauganschlüsse 209.1 und 209.2 sowie zwei Druckanschlüsse 208.1 und 208.2 auf. Diese sind jeweils mit entsprechenden Saugräumen 211.1, 211.2 und Druckräumen 212.1 und 212.2 verbunden. Die Saugräume und Druckräume werden dabei im Bereich der miteinander kämmenden Verdrängerelemente gebildet. Die Verdrängerelemente 204, 205.1 und 205.2 fungieren als Antriebselemente. Die Verdrängerelemente 205.1 und 205.2 sind wenigstens mittelbar drehfest auf einer Abtriebswelle gelagert. Im dargestellten Fall sind die Verdrängerelemente mit unterschiedlichen Abmessungen ausgeführt. Insbesondere unterscheiden diese sich hinsichtlich ihres Kopfkreisdurchmessers d_{K}, des Fußkreisdurchmessers d_{F} sowie des Grundkreisdurchmessers d. Vorzugsweise sind wie in der Fig. 3 dargestellt die beiden zweiten Verdrängerelemente 205.1 und 205.2 hinsichtlich ihrer geometrischen Abmessungen in axialer und radialer Richtung identisch ausgeführt. Denkbar sind jedoch auch Ausführungen, welche unterschiedliche zweite Verdrängerelemente 205.1 und 205.2 aufweisen. Vorzugsweise wird jedoch die in der Fig. 3 dargestellte Form gewählt, da diese ein höchstes Maß an Standardisierung zuläßt. Die Durchlaufrichtung des Betriebsmittels ist mittels Pfeilen eingetragen. Daraus ist ersichtlich, daß zwei unterschiedliche Strömungsrichtungen und damit Förderrichtungen mit diesem Zahnradmotor 200 ermöglicht werden, jedoch gleiche Abtriebsdrehrichtungen erzielt werden.

Zu einer erfindungsgemäß gestalteten Zahnradmotorenreihe von Zahnradmotoren mit Außenverzahnung gemäß der Fig. 3 werden die Achsabstände A1 und A2 zwischen den einzelnen Zahnradmotoren der Motorenreihe konstant gehalten, lediglich die Verzahnungshöhe wird in analoger Weise wie in den Fig. 1 und 2 beschrieben verändert. Die einzelnen Zahnradmotoren der erfindungsgemäß gestalteten Zahnradmotorenreihe lassen sich somit auf einfache Art und Weise ebenfalls aus einem Zahnradmotor gemäß Fig. 3 mit einer Grundkonfiguration für die Verdrängerelemente 204 bzw. 205.1 und 205.2 entwickeln. Auch hier sind die einzelnen Verzahnungen als Hochverzahnungen ausgeführt, dies bietet den Vorteil, eine möglichst breite Streuung der theoretischen Fördervolumina zu erzielen, bei gleichbleibender Gewährleistung der Funktion des Zahnradmotors, insbesondere der Abdichtung zwischen Austrittsraum und Druckraum.

Die in den Fig. 1 bis 3 dargestellten Ausführungen stellen bevorzugte Ausgestaltungen von Zahnradmotoren einer erfindungsgemäßen Zahnradmotorenreihe dar.

## Patentansprüche

1. Baureihe für Zahnradmotoren für unterschiedliche Fördervolumina
mit wenigstens zwei Zahnradmotoren (1, 100); wobei
jeder Zahnradmotor (1, 100) wenigstens zwei miteinander kämmende Verdrängerelemente (4, 5, 104, 105), ein erstes Verdrängerelement (4, 104) und ein zweites Verdrängerelement (5, 105), in Form von Zahnrädern aufweist, und
die einzelnen Zahnradmotoren (1, 100) der Baureihe
a) identische Abmessungen für den Achsabstand (a) zwischen den theoretischen Achsen bzw. den theoretischen Rotationsachsen (R1, R2) der beiden Verdrängerelemente (4, 5, 104, 105)
b) eine identische Verzahnungsbreite (ZB1, ZB2) in Form einer identischen axialen Erstreckung der Verzahnungselemente aufweisen, und wobei
die einzelnen Zahnradmotoren (1, 100) sich wenigstens hinsichtlich der Größe des Kopfkreisdurchmessers (d_{K1}, d_{K2}, d_{K18}, d_{K2B}) wenigstens eines der beiden Verdrängerelemente (4, 5, 104, 105) voneinander unterscheiden.

2. Baureihe für Zahnradmotoren für unterschiedliche Fördervolumina nach Anspruch 1, **dadurch gekennzeichnet, daß** die einzelnen Verdrängerelemente (4, 5, 104, 105) der einzelnen Zahnradmotoren (1, 100) und/oder der Zahnradmotoren (1, 100) der Baureihe geometrisch derart ausgelegt sind, daß die Verzahnung durch eine konstante Teilkreisteilung (p) beschreibbar ist.

3. Baureihe für Zahnradmotoren unterschiedlicher Fördervolumina nach einem der Ansprüche 1 oder 2, **dadurch gekennzeichnet, daß** die Verdrängerelemente (4, 5, 104, 105) als Zahnräder mit Außenverzahnung ausgeführt sind.

4. Baureihe nach Anspruch 3, **dadurch gekennzeichnet, daß** die einzelnen Verdrängerelemente (4, 5 oder 104, 105) eines Zahnradmotors (1 oder 100) der Baureihe identische Abmessungen und geometrische Auslegung aufweisen.

5. Baureihe nach einem der Ansprüche 1 bis 3, **gekennzeichnet durch** die folgenden Merkmale:
jeder Zahnradmotor (200) ist als zweistufiger Zahnradmotor ausgeführt;
es ist wenigstens ein weiteres drittes Verdrängerelement (205.2) vorgesehen, welches mit einem der ersten beiden Verdrängerelemente (204, 205.1) kämmt;
wenigstens zwei Verdrängerelemente (204, 205.1, 205.2) weisen unterschiedliche Kopfkreisdurchmesser auf.

6. Baureihe nach einem der Ansprüche 1 oder 2, **dadurch gekennzeichnet, daß** das erste Verdrängerelement als Hohlrad mit Innenverzahnung und das zweite Verdrängerelement als mit diesem kämmendes außenverzahntes Ritzel ausgeführt sind.

7. Baureihe nach einem der Ansprüche 1 bis 6, **dadurch gekennzeichnet, daß** die Verzahnungen als Schrägverzahnung ausgeführt sind.

## Claims

1. A series of gear motor for different conveying volumes, comprising at least two gear motors (1, 100), with each gear motor (1, 100) comprising at least two mutually combing displacer elements (4, 5, 104, 105), namely a first displacer element (4, 104) and a second displacer element (5, 105), in the form of gearwheels, and the individual gear motors (1, 100) of the series comprising
a) identical dimensions for the axial distance (a) between the theoretical axes or the theoretical rotational axes (R1, R2) of the two displacer elements (4, 5, 104, 105),
b) an identical gearing width (ZB1, ZB2) in the form of an identical axial extension of the gearing elements, and with
the individual gear motors (1, 100) differing from each other at least with respect to the size of the tip diameter (d_{K1}, d_{K2}, d_{K1B}, d_{K2B}) of at least one of the two displacer elements (4, 5, 104, 105).

2. A series of gear motor for different conveying volumes as claimed in claim 1, **characterized in that** the individual displacer elements (4, 5, 104, 105) of the individual gear motors (1, 100) and/or the gear motors (1, 100) of the series are configured from a geometrical standpoint such that the gearing can be described by constant transverse pitch (p).

3. A series of gear motor of different conveying volumes as claimed in one of the claims 1 or 2, **characterized in that** the displacer elements (4, 5, 104, 105) are arranged as gearwheels with external toothing.

4. A series as claimed in claim 3, **characterized in that** the individual displacer elements (4, 5 or 104, 105) of a gear motor (1 or 100) of the product line have identical dimensions and geometrical configuration.

5. A series as claimed in one of the claims 1 to 3, **characterized by** the following features:
each gear motor (200) is configured as a two-stage gear motor;
at least one further third displacer element (205.2) is provided which combs with one of the first two displacer elements (204, 205.1);
at least two displacer elements (204, 205.1, 205.2) have different tip diameters.

6. A series as claimed in one of the claims 1 or 2, **characterized in that** the first displacer element is arranged as an internal geared wheel with internal toothing and the second displacer element as an externally toothed pinion combing with the same.

7. A series as claimed in one of the claims 1 to 6, **characterized in that** the gearings are arranged as helical gearings.

## Revendications

1. Série de construction pour des moteurs à engrenages pour différents volumes de déplacement, avec au moins deux moteurs à engrenages (1, 100), dans laquelle
chaque moteur à engrenages (1, 100) présente au moins deux éléments de refoulement (4, 5, 104, 105) engrenant l'un avec l'autre, un premier élément de refoulement (4, 104) et un second élément de refoulement (5, 105), prenant la forme de roues dentées, et
les différents moteurs à engrenages (1, 100) de la série
a) ont des dimensions identiques d'entraxe (a) entre les axes théoriques ou les axes de rotation théoriques (R1, R2) des deux éléments de refoulement (4, 5, 104, 105),
b) ont une largeur de denture (ZB1, ZB2) sensiblement identique sous la forme d'une étendue axiale sensiblement identique des éléments de denture, et dans laquelle
les différents moteurs à engrenages (1, 100) diffèrent l'un de l'autre au moins par la taille du diamètre de cercle extérieur (d_{K1}, d_{K2}, d_{K18}, d_{K28}) de l'un au moins des deux éléments de refoulement (4, 5, 104, 105).

2. Série de construction pour des moteurs à engrenage pour des volumes de déplacement différents selon la revendication 1, **caractérisée en ce que** les différents éléments de refoulement (4, 5, 104, 105) des différents moteurs à engrenages (1, 100) et/ou des moteurs à engrenages (1, 100) de la série de construction ont une géométrie telle que la denture puisse être circonscrite par une division en arcs gradués (p) constante.

3. Série de construction pour des moteurs à engrenages ayant des volumes de déplacement différents selon l'une quelconque des revendications 1 ou 2, **caractérisée en ce que** les éléments de refoulement (4, 5, 104, 105) sont conçus comme des roues dentées à denture extérieure.

4. Série de construction selon la revendication 3, **caractérisée en ce que** les différents éléments de refoulement (4, 5 ou 104, 105) d'un moteur à engrenages (1 ou 100) de la série ont des dimensions et une géométrie identiques.

5. Série de construction selon l'une quelconque des revendications 1 à 3, **caractérisée en ce que** :
chaque moteur à engrenages (200) est conçu comme un moteur à engrenages à deux niveaux ;
il est prévu au moins un troisième élément de refoulement (205.2) qui engrène avec l'un des deux premiers éléments de refoulement (204, 205.1) ; deux éléments de refoulement (204, 205.1, 205.2) au moins ont des diamètres de cercle extérieur différents.

6. Série de construction selon l'une quelconque des revendications 1 ou 2, **caractérisée en ce que** le premier élément de refoulement est conçu comme une roue à denture intérieure et le deuxième élément de refoulement comme un pignon à denture extérieure engrenant avec celle-ci.

7. Série de construction selon l'une quelconque des revendications 1 à 6, **caractérisé en ce que** les dentures sont réalisées comme une denture oblique.
